# EUROPEAN PATENT SPECIFICATION

(11) **EP 2 166 831 B1**
(45) Date of publication and mention of the grant of the patent: **20.07.2016**
(21) Application number: 08776248.0
(22) Date of filing: 09.07.2008
(51) Int. Cl.: A01D 45/02

(54) **HARVESTER ADAPTER FOR HARVESTING GRAIN CROPS, PARTICULARLY CORN**
ERNTEMASCHINE ZUR ERNTE VON GETREIDE, VOR ALLEM MAIS
ADAPTATEUR DE MOISSONNEUSE DESTINÉ À MOISSONNER DES CÉRÉALES, EN PARTICULIER LE MAÏS

(30) Priority: 11.07.2007 HU 0700119 U
(43) Date of publication of application: 31.03.2010
(73) Proprietor: Optigép KFT., 5630 Békes (HU)
(72) Inventor: KOMLÓSI, Mihály, H-5900 Orosháza (HU)
(74) Representative: Jakabné Molnar, Judit
(86) International application number: PCT/HU2008/000082
(87) International publication number: WO 2009/007763

(56) References cited:
- EP-A- 1 493 319
- DE-U1-202005 003 236
- US-A- 3 404 516
- US-A1- 2004 144 073

## Description

The present invention concerns a harvester adapter for harvesting grain crops, particularly corn, comprising a frame structure attached to a harvester machine, at least one snapping unit having a main drive means, and at least one stalk shredder unit attached to the frame structure, the stalk shredder unit having a shredder drive.

Grain crops, such as sunflower or corn are usually harvested with combine harvesters equipped with adapters (or, to use a more widespread term, "headers"). The adapters or headers have stalk guiding means adapted for guiding the stalks to a harvester unit comprising reciprocating or rotating cutting means. A crop conveying means adapted for conveying the gathered crops to the harvester through a throat is connected to the harvester unit. Such adapters are disclosed among others in patent descriptions HU 220 027 and HU 184 307.

A row-type harvesting machine is disclosed in patent description HU 211 802. The machine of the invention has snouts arranged corresponding to the row spacing, extending along both sides of rows. The snouts are rotatable about a hinge point and are connected to a vibrated envelope attached to a frame structure. An active stalk guiding mechanism and a harvesting mechanism are disposed under the vibrated envelopes, with one or more one grain collecting means being disposed rearward from them. The stalk guiding mechanism extends into an open leading-end channel formed between the portions of the vibrated envelope. The stalk guiding mechanism is implemented utilizing guide chains. The harvesting machine according to the invention is suitable for harvesting down crops or short-stalk crops with minimal grain loss. In fields harvested with such headers a stubble with a height of 50-100 cm remains after harvesting is completed. The stubble is usually processed in a separate step using stalk shredder machines. The multiple-step harvesting process is time consuming and requires an extremely high amount of energy.

A known art solution is the sunflower harvesting adapter NAS 676 made by OPTIGÉP Kft. (www.optigep.hu). Apart from stalk gathering and harvester units this adapter also comprises stalk shredder units mounted on its frame structure. The stalk shredder unit consists of rotors driven through roller chains from two sides. The rotors are disposed on a common beam with a spacing corresponding to the row spacing. Because the harvesting and stalk shredder units have common drive means, this adapter is disadvantageously incapable of performing harvesting and stalk shredding operations separately.

The prior art also includes the corn harvesting adapter manufactured by OPTIGÉP Kft. The apparatus has a snapping unit mounted on a frame structure, the snapping unit comprising stalk gathering and snapping rolls. The apparatus also comprises stalk shredder units attached to the frame structure under the snapping unit, immediately below the snapping rolls. This adapter also has the disadvantage of not being suitable for separating functions because of the common drive means of the snapping and stalk shredder units.

DE 20 2005 003236 U1 discloses a harvester adapter for harvesting grain crops, particularly corn, comprising a frame structure attached to a harvester machine, at least one snapping unit having a main drive means, and at least one stalk shredder unit attached to the frame structure, the stalk shredder unit having a shredder drive.

The present invention is based on the recognition that it may become necessary during agricultural operations, more particularly during harvesting operations, to occasionally separate harvesting from stalk shredding. We have recognised that in case the functions of the adapter are separable the same adapter can be utilized for performing multiple tasks to widen the scope of its application.

Based on this recognition therefore the objective of the present invention is to provide an adapter for harvesting grain crops, primarily corn, which has separable drive means for the snapping unit and the stalk shredder unit.

The objective is accomplished by disposing a clutch means between the shaft of the main drive means of the snapping unit and the shaft of the shredder drive of the stalk shredder unit, where the stalk shredder unit is in driving connection with the main drive means of the snapping unit.

According to a conceivable embodiment of the invention the adapter is attached to a harvester machine, for instance a combine harvester. The adapter according to the invention may also be attached to a self-propelled harvester machine. In a preferred embodiment, the adapter is suitable for harvesting row planted grain crops. The efficiency of the harvesting operation may be increased by increasing the number of rows harvested simultaneously. Road travel of combines with oversize adapters attached may be facilitated by implementing the frame of the adapter in a collapsible configuration, for example in a manner described in utility model HU 3068 U. The adapter may be produced with collapsible as well as with fixed frames. In addition to harvesting row crops, the adapter according to the utility model is suitable for harvesting rowless or broadcast planted crops as well as for processing the stubble remaining in field. In case of rowless crops the width of the adapter and the arrangement of the stalk shredder units is determined according to economic considerations.

According to a preferred embodiment of the adapter, snapping units corresponding in number to the rows to be harvested simultaneously or to the intended width of the strip to be harvested in a single step are attached to the frame structure of the adapter, with adjustable snouts being attached to the leading end of the snapping units. Snapping units are secured to the frame structure such that a channel with an open leading end is formed between two neighbouring units. Stalks of crops to be harvested enter these channels as the harvester machine advances. The snapping unit comprises snapping rolls cooperating with snap rods and crop gathering units located above the snapping rolls and snap rods. In a preferred embodiment of the invention the crop gathering units are implemented as gatherer finger chains. Corn stalks directed into the snapping unit are pulled down by the counter-rotating snapping rolls and corn ears are snapped off as they knock against the snapping rods. The gatherer finger chain conveys the ears removed from stalks to a collecting auger located in a collecting trough disposed inside the frame structure. The collecting auger further conveys corn ears to the throat of the harvester machine.

Snapping rolls and gatherer finger chains of the snapping units are driven through a main drive means known per se. The main drive means may be implemented as a mechanical, hydraulic, or electric drive. According to a preferred embodiment of the invention the main drive means of the snapping unit is driven hydraulically from the hydraulic system of the harvester machine.

The stalk shredder units are disposed immediately below the snapping rolls. The stalk shredder units are applied for shredding stalks that have been pulled down by the snapping rolls. Stalk shredder units are equipped with shredder drives known per se. The main drive means of the snapping units and the shredder drive of the stalk shredding units are in driving connection.

However, according to the present invention the driving connection between the main drive means of the snapping unit and the shredder drive of the stalk shredder units may be interrupted by a clutch means. In a preferred embodiment the clutch means is implemented as a claw clutch. In a further preferred embodiment the clutch means may be a Hardy disc, Oldham coupling or other slotted and ribbed coupling element. The clutch means may be operated by mechanical, hydraulic, or electric means.

According to another preferred embodiment of the invention individual clutch means may be engaged and disengaged one-by-one. This means that the shredder drives of individual units may be operated independently of one another. To provide the independent operation of shredder drives, according to a preferred embodiment of the utility model, levers are installed for operating (engaging or disengaging) the clutches.

The embodiment where multiple or all clutches disposed between the main drive means and the shredder drive means are operated by central control action also falls into the scope of the present utility model.

Details of the invention will be described referring to the attached drawings, where
Fig. 1 shows the schematic view of the adapter according to the invention mounted on a harvester machine,
Fig. 2 is the schematic front view of the snapping and stalk shredder units of the adapter,
Fig. 3 shows detail A of Fig. 2 magnified for easier viewing,
Fig. 4 is the top plan view of the snapping unit and the stalk shredder unit,
Fig. 5 shows the front view of the snapping unit and the stalk shredder unit, with the clutch disengaged, and
Fig. 6 shows the front view of the snapping unit and the stalk shredder unit, with the clutch engaged.

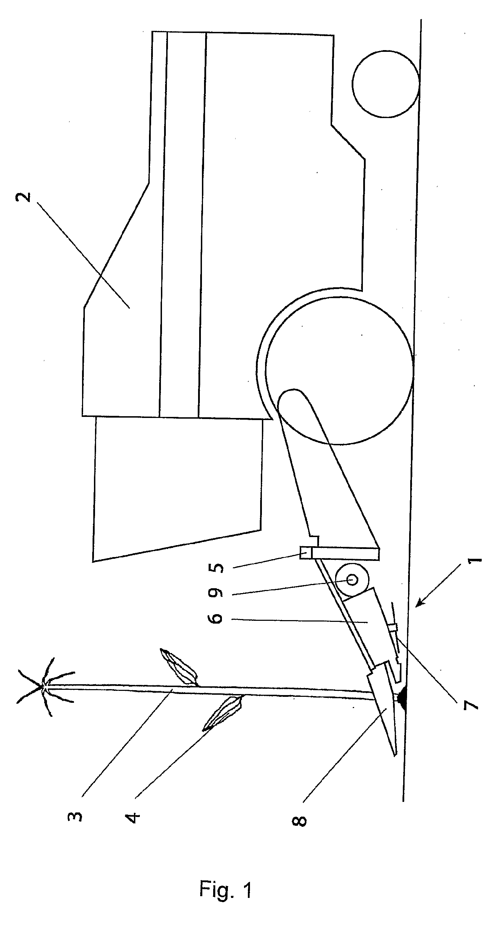

Fig. 1 shows the schematic view of the harvester adapter according to the invention. The adapter 1 is mounted on a harvester machine 2 by attaching the frame structure 5 to the harvester. The adapter 1 has snapping units 6 and stalk shredder units 7 known per se. The adapter 1 illustrated in the drawings has a fixed (non-collapsible) frame structure and is capable of simultaneously harvesting six rows. Snapping units 6 of the adapter 1 comprise forwardly attached snouts 8 and are attached to the frame structure 5 such that channels are formed between neighbouring units. The snouts 8 direct corn stalks 3 into the channels between the snapping units 6. A collecting auger 9 with left- and right-handed flighting is disposed in an auger trough rearwards of the snapping units 6. The collecting auger 9 conveys corn ears 4 to the throat. Under the snapping units 6 there are stalk shredder units 7 attached to the frame structure 5 of the adapter 1.

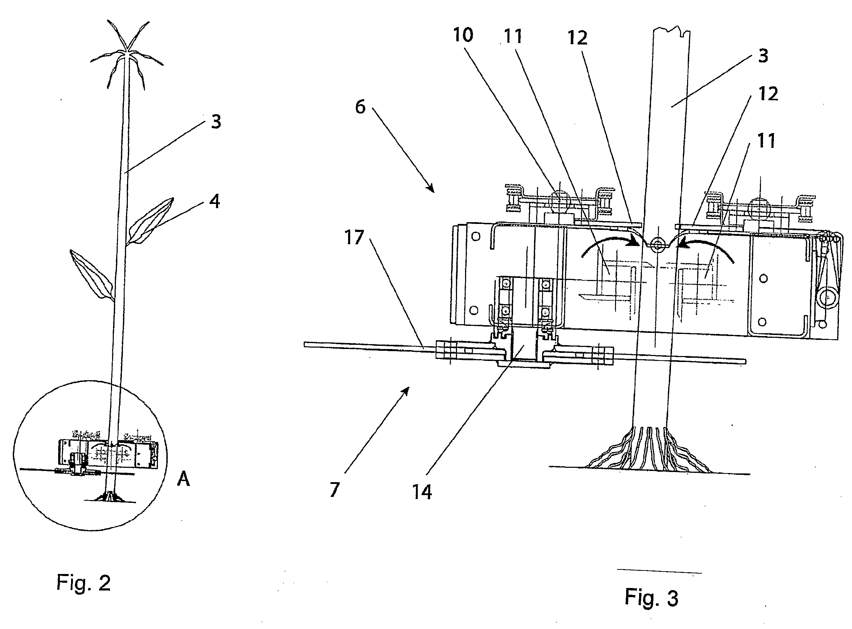

As it is clearly seen in Fig. 2 and 3, each stalk shredder unit 7 is located immediately below the corresponding snapping unit 6. Stalk shredder units 7 consist of a shredder disc 17 and a shredder drive 14 applied for driving the disc. The stalk shredder units 7 have a configuration known per se, and are mounted on the adapter such that they can shred corn stalks 3 grabbed and pulled down by the snapping unit 6 after the corn ears 4 have been removed.

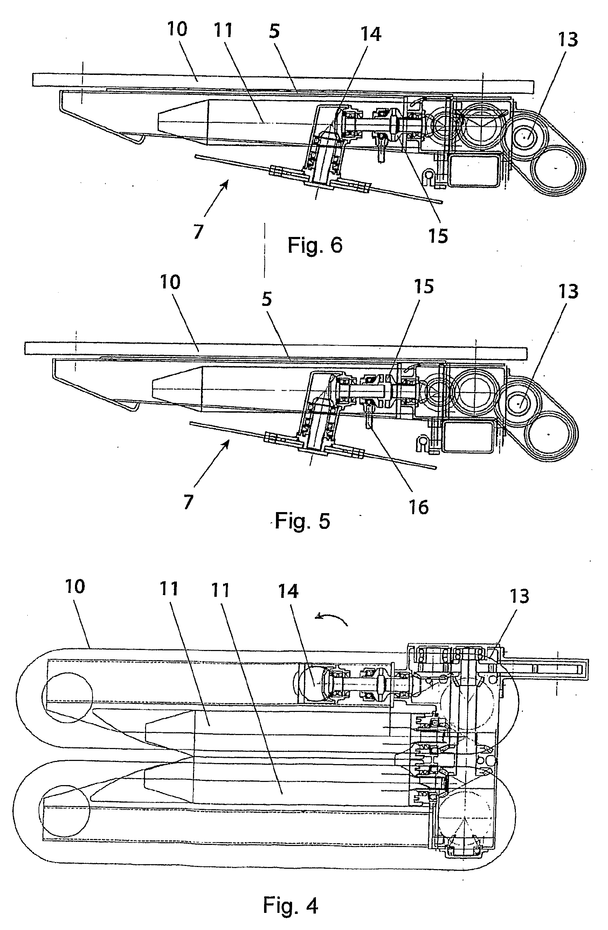

Figures 4-6 show the top plan view and the front view of the snapping unit 6 and the stalk shredder unit 7. The snapping unit 6 consists of gatherer finger chains 10 attached to the frame structure 5, counter-rotating snapping rolls 11 located below the gatherer finger chains 10 and snap rods 12 disposed above the snapping rolls 11. The gatherer finger chains 10 and the snapping rolls 11 are driven through main drive means 13.

The main drive means 13 of the snapping unit 6 and the shredder drive 14 of the stalk shredder unit 7 are in direct driving connection. A claw clutch 15 is disposed between the shaft of the main drive means 13 and the shaft of the shredder drive 14. The claw clutch 15 may be engaged and disengaged manually by means of a lever 16. As it is shown in Fig. 5, the driving connection between the drives may be interrupted by disengaging the claw clutch 15. In this case the harvester machine 2 will gather corn ears 4 without shredding the corn stalks 3. Because each clutch is fitted with an engaging/disengaging lever 16, the stalk shredder units 7 may be turned off row-by-row. As the harvester machine advances in the field with the adapter mounted, snouts 8 direct plants to be harvested into the snapping units 6.

Once corn stalks 3 have entered the snapping units 6, the stalks 3 are pulled down by the counter-rotating snapping rolls 11 and corn ears 4 are snapped off as they knock against the snapping rods 12. Corn ears 4 are conveyed by the gatherer finger chains 10 to the collecting auger 9 disposed for rotation in the auger trough. Corn stalks 3 pulled down by the snapping rolls 11 are shred by the shredder disc 17 of the stalk shredder unit 7. If for some reason it is not needed to shred corn stalks 3 in a particular row, the corresponding claw clutch 15 may be manually disengaged by pulling the lever 16. It is of course possible to disengage clutches in all rows. This means that the harvester machine will be utilized only for gathering corn ears (stalk shredding will not be performed).

In addition to corn harvesting, the adapter according to the invention may be utilized for gathering other grain crops, for instance sunflower.

The main advantage of the harvester machine equipped with the adapter (or header) according to the present invention is that ear gathering and stalk shredding operations may be separated during harvesting, and the same equipment may be used to perform both operations.

### List of reference numerals

- 1: adapter
- 2: harvester machine
- 3: corn stalk
- 4: corn ear
- 5: frame structure
- 6: snapping unit
- 7: stalk shredder unit
- 8: snout
- 9: collecting auger
- 10: gatherer finger chain
- 11: snapping roll
- 12: snap rod
- 13: main drive means
- 14: shredder drive
- 15: claw clutch
- 16: lever
- 17: shredder disc

## Claims

1. Harvester adapter (1) for harvesting grain crops, particularly corn, comprising a frame structure (5) attached to a harvester machine, at least one snapping unit (6) having a main drive means (13), and at least one stalk shredder unit (7) attached to the frame structure (5), the stalk shredder unit (7) having a shredder drive (14), **characterised by** that the main drive means (13) of the snapping unit (6) may be operated independently of the shredder drive (14) of the stalk shredder unit (7) such that a clutch means is disposed between the shaft of the main drive means (13) of the snapping unit (6) and the shaft of the shredder drive (14) of the stalk shredder unit (7), where the stalk shredder unit (6) is in driving connection with the main drive means (13) of the snapping unit (7), and where the clutch means are operated centrally or in a unit-by-unit manner.

2. The adapter according to Claim 1, **characterised by** that the clutch means disposed between the main drive means (13) and the shredder drive (14) is a claw clutch (15).

3. The adapter according to Claims 1 or Claim 2, **characterised by** that clutch means disposed between the main drive means (13) and the shredder drives (14) are operated by levers (16), each lever (16) being utilized for operating the clutch means of one stalk shredder unit (7) independently.

## Patentansprüche

1. Erntegerätadapter (1) zum Ernten von Getreidepflanzen, insbesondere Mais, umfassend eine Rahmenstruktur (5), die an einer Erntemaschine befestigt ist, mindestens eine Pflückeinheit (6), die ein Hauptantriebsmittel (13) aufweist, und mindestens eine Stängelhäckslereinheit (7), die an der Rahmenstruktur (5) befestigt sind, wobei die Stängelhäckslereinheit (7) einen Häckslerantrieb (14) aufweist, **dadurch gekennzeichnet, dass**
das Hauptantriebsmittel (13) der Pflückeinheit (6) unabhängig von dem Häckslerantrieb (14) der Stängelhäckslereinheit (7) betrieben werden kann, derart dass ein Kupplungsmittel zwischen der Welle des Hauptantriebsmittels (13) der Pflückeinheit (6) und der Welle des Häckslerantriebs (14) der Stängelhäckslereinheit (7) angeordnet ist, wo die Stängelhäckslereinheit (6) in Antriebsverbindung mit dem Hauptantriebsmittel (13) der Pflückeinheit (7) steht und wo die Kupplungsmittel zentral oder Einheit für Einheit betrieben werden.

2. Adapter nach Anspruch 1, **dadurch gekennzeichnet, dass** das Kupplungsmittel, das zwischen dem Hauptantriebsmittel (13) und dem Häckslerantrieb (14) angeordnet ist, eine Klauenkupplung (15) ist.

3. Adapter nach Anspruch 1 oder 2, **dadurch gekennzeichnet, dass** Kupplungsmittel, die zwischen dem Hauptantriebsmittel (13) und den Häckslerantrieben (14) angeordnet sind, durch Hebel (16) bedient werden, wobei jeder Hebel (16) unabhängig zum Bedienen des Kupplungsmittels einer Stängelhäckslereinheit (7) genutzt wird.

## Revendications

1. Adaptateur de moissonneuse (1) pour moissonner des récoltes de céréales, en particulier du maïs, comprenant une structure de châssis (5) fixée à une moissonneuse, au moins une unité d'arrachage (6) ayant un moyen d'entraînement principal (13) et au moins une unité de déchiquetage de tiges (7) fixée à la structure de châssis (5), l'unité de déchiquetage de tiges (7) ayant une commande de déchiqueteuse (14),
**caractérisé en ce que** :
le moyen d'entraînement principal (13) de l'unité d'arrachage (6) peut être actionné indépendamment de la commande de déchiqueteuse (14) de l'unité de déchiquetage de tiges (7) de sorte qu'un moyen d'embrayage soit disposé entre l'arbre du moyen d'entraînement principal (13) de l'unité d'arrachage (6) et l'arbre de la commande de déchiqueteuse (14) de l'unité de déchiquetage de tiges (7), dans lequel l'unité de déchiquetage de tiges (6) est en liaison d'entraînement avec le dispositif d'entraînement principal (13) de l'unité d'arrachage (7) et dans lequel le moyen d'embrayage est actionné au centre ou en mode unité par unité.

2. Adaptateur selon la revendication 1, **caractérisé en ce que** le moyen d'embrayage disposé entre le moyen d'entraînement principal (13) et la commande de déchiqueteuse (14) est un embrayage à griffes (15).

3. Adaptateur selon la revendication 1 ou la revendication 2, **caractérisé en ce que** le moyen d'embrayage disposé entre le moyen d'entraînement principal (13) et les commandes de déchiqueteuse (14) sont actionnés par des leviers (16), chaque levier (16) étant utilisé pour actionner le moyen d'embrayage d'une unité de déchiquetage de tiges (7) indépendamment.
